# EUROPEAN PATENT APPLICATION

(11) **EP 4 478 445 A1**
(43) Date of publication of application: **18.12.2024**
(21) Application number: 24181388.0
(22) Date of filing: 11.06.2024
(51) Int. Cl.: H01M 4/131, H01M 4/525, H01M 10/052, H01M 4/02

(54) **ELECTRODE FOR RECHARGEABLE BATTERY AND ELECTRODE ASSEMBLY AND RECHARGEABLE LITHIUM BATTERY INCLUDING THE SAME**

(30) Priority: 13.06.2023 KR 20230075707
(71) Applicant: Samsung SDI Co., Ltd., Yongin-si, Gyeonggi-do 17084 (KR)
(72) Inventor: Ha, Jaehwan, 17084 Gyeonggi-do (KR); Kim, Duckhyun, 17084 Gyeonggi-do (KR); Lee, Dong Myung, 17084 Gyeonggi-do (KR); Yoo, Heeeun, 17084 Gyeonggi-do (KR)
(74) Representative: Michalski Hüttermann & Partner Patentanwälte mbB

(57) **Abstract**

An electrode includes: a substrate including an electrode uncoated portion and an electrode active portion; a functional layer on the substrate; and an active material layer on the functional layer of the electrode active portion. The functional layer includes a first portion overlapping the electrode active portion and a second portion extending from the first portion to the electrode uncoated portion. The electrode is for a rechargeable battery.

## Description

### BACKGROUND

### 1. Field

Embodiments of the present disclosure relate to an electrode, and for example, to an electrode for a rechargeable battery, and an electrode assembly and a rechargeable battery (*e.g*., a rechargeable lithium battery) including the same.

### 2. Description of the Related Art

Rechargeable batteries that have relatively high energy densities and are (easily) portable are utilized as driving power sources for mobile information terminals, such as portable phones, notebooks (or laptop computers), smartphones, and/or the like.

The rechargeable battery may include an electrode assembly in which a negative electrode, a separator, and a positive electrode are sequentially stacked, and the positive electrode and the negative electrode may be formed in or have different areas.

If the areas of the two different electrodes are different, sizes of active material layers of different polarities may be different. Thus, an exposed substrate (*e.g*., current collector) and the active material layers of different polarities may contact each other, resulting in a short circuit. If the short circuit occurs, a large electric current may flow to/from any one electrode within a short time causing the rechargeable battery to ignite or explode.

To address this issue, one or more suitable insulating layers may be formed, and materials with relatively low thermal conductivity may be utilized as the insulating layer.

If the material with relatively low thermal conductivity is utilized as the insulating layer and the rechargeable battery is quickly charged or an output of the rechargeable battery is increased, a section where an electric current is concentrated may occur. In such situations, a temperature of the rechargeable battery may increase, increasing the possibility of undesired ignition.

### SUMMARY

Aspects of one or more embodiments of the present disclosure relate to an electrode that may prevent or reduce a risk of a short circuit and prevent or reduce (*e.g*., protect from) a sudden increase in heat at a portion where an electric current is concentrated, and to an electrode assembly and a rechargeable battery (*e.g.e.g*., a lithium rechargeable battery) including the same.

Additional aspects will be set forth in part in the description which follows and, in part, will be apparent from the description, or may be learned by practice of the presented embodiments of the disclosure.

An electrode for a rechargeable battery according to one or more embodiments of the present disclosure includes: a substrate including an electrode uncoated portion and an electrode active portion; a functional layer on the substrate; and an active material layer on the functional layer of the electrode active portion. The functional layer includes a first portion overlapping the electrode active portion and a second portion extending from the first portion to the electrode uncoated portion.

In one or more embodiments, a resistance (*e.g*., a resistance value) of the functional layer may be greater than a resistance (*e.g*., a resistance value) of the substrate and may be less than a resistance (*e.g*., a resistance value) of the active material layer. The resistance (*e.g*., a resistance value) of the functional layer may be 5 to 25 times greater than the resistance (*e.g*., a resistance value) of the substrate.

In one or more embodiments, an area of the second portion may be 60% or less than an area of the electrode uncoated portion. A length of the second portion may be greater than 0 mm and 5 mm or less. A length of the electrode uncoated portion may be 2 mm or more and 10 mm or less.

In one or more embodiments, a boundary line of the functional layer may be within a boundary line of the substrate.

In one or more embodiments, the electrode uncoated portion may protrude from one side of the electrode active portion.

In one or more embodiments, the active material layer may include a positive electrode active material (*e.g*., a positive electrode active material for a rechargeable battery).

In one or more embodiments, the active material layer may include an active material represented by Chemical Formula A1.

Chemical Formula A1 Liₐ₁₁Niₓ₁₁M¹¹_{y11}M¹²_{1-x11-y11}O₂

In Chemical Formula A1, 0.9 ≤ a11 ≤ 1.8, 0.3 ≤ x11 ≤ 1, and 0 ≤ y11 ≤ 0.7, and each of M¹¹ and M¹² may independently be (e.g., be selected from among) Al, B, Ce, Co, Cr, F, Mg, Mn, Mo, Nb, P, S, Si, Sr, Ti, V, W, Zr, and/or a (*e.g*., any suitable) combination thereof.

In one or more embodiments, the functional layer may include a compound represented by Chemical Formula 1, a compound represented by Chemical Formula 2, and/or a (*e.g*., any suitable) combination thereof.

Chemical Formula 1 Liₐ₁M¹ₓ₁Fe₍₁₋ₓ₁₎PO₄

In Chemical Formula 1, 0.90 ≤ a1 ≤1.5, and 0 ≤ x1 ≤ 0.4, and M¹ may be Mg, Co, Ni, and/or a (*e.g*., any suitable) combination thereof.

Chemical Formula 2 Liₐ₂Mnₓ₂Fe₍₁₋ₓ₂₎PO₄

In Chemical Formula 2, 0.90 ≤ a2 ≤ 1.5 and 0.1 ≤ x2 ≤ 1.

An electrode assembly according to one or more embodiments of the present disclosure includes: a first electrode including the above-described electrode; a second electrode having an opposite polarity to the first electrode; and a separator between the first electrode and the second electrode.

In one or more embodiments, a distance between a boundary line of the first electrode and a boundary line of the second electrode may be greater than 0 and 5 mm or less.

In one or more embodiments, the first electrode, the separator, and the second electrode may have a sheet shape and may be alternately and repeatedly stacked.

A rechargeable battery according to one or more embodiments of the present disclosure includes the electrode assembly and an electrolyte.

If the electrode according to one or more embodiments of the present disclosure is utilized, it is possible to provide a safe electrode that does not cause a risk or reduces a risk of a short circuit and a sudden increase in heat at a portion (*e.g.e.g*., a tab) where an electric current is concentrated, and an electrode assembly and a rechargeable battery including the same.

### BRIEF DESCRIPTION OF DRAWINGS

FIG. 1 is a schematic plan view of an electrode according to one or more embodiments of the present disclosure.
FIG. 2 is a schematic cross-sectional view taken along a line II-II' of FIG. 1, according to one or more embodiments of the present disclosure.
FIG. 3 is a schematic exploded diagram of a stacked electrode assembly according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Sizes and thicknesses of constituent members shown in the accompanying drawings may be exaggerated or reduced for better understanding and ease of description, and the present disclosure is not limited to the illustrated sizes and thicknesses. In the drawings, the thickness of layers, films, panels, regions, and/or the like, may be exaggerated for clarity. In the drawings, for better understanding and ease of description, thicknesses of some layers and areas may be exaggeratedly displayed.

Unless otherwise noted, like reference numerals denote like elements throughout the attached drawings and the written description, and thus, duplicative descriptions thereof may not be provided.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element, such as a layer, film, region or substrate, is referred to as being "on" another element, it can be directly on the other element, or one or more intervening elements may be present. In addition, it will also be understood that when an element is referred to as being "between" two elements, it can be the only element between the two elements, or one or more intervening elements may also be present.

As used herein, the singular forms "a," "an" and "the" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

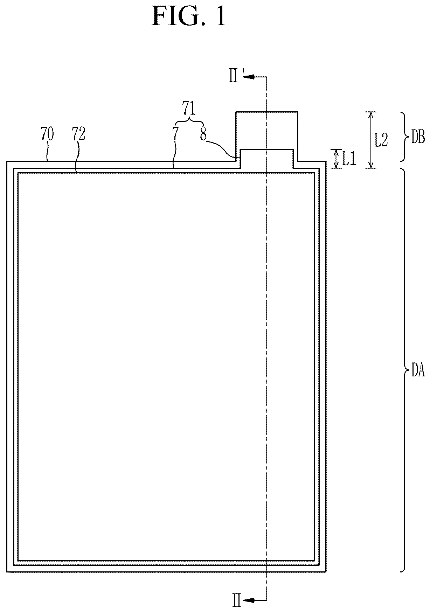

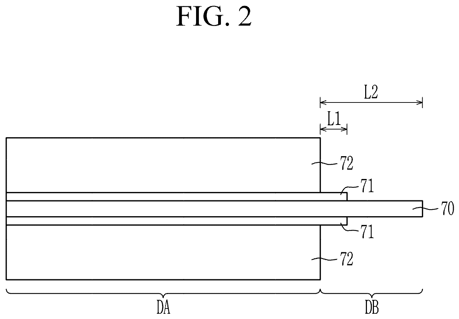

FIG. 1 is a schematic plan view of an electrode according to one or more embodiments of the present disclosure, and FIG. 2 is a schematic cross-sectional view taken along a line II-II' of FIG. 1, according to one or more embodiments of the present disclosure.

As shown in FIG. 1 and FIG. 2, the electrode according to one or more embodiments of the present disclosure may include a substrate 70, a functional layer 71 formed on the substrate 70, and an active material layer 72 formed on the functional layer 71. If the electrode is a positive electrode, the substrate 70 may be aluminum (Al).

The functional layer 71 may include a material including a compound represented by Chemical Formula 1, a compound represented by Chemical Formula 2, and/or a (*e.g*., any suitable) combination thereof:

Chemical Formula 1 Liₐ₁M¹ₓ₁Fe₍₁₋ₓ₁₎PO₄

In Chemical Formula 1, for example, 0.90 ≤ a1 ≤ 1.5, 0≤ x1 ≤ 0.4, and M¹ may be Mg, Co, Ni, and/or a (*e.g*., any suitable) combination thereof.

Chemical Formula 2 Liₐ₂Mnₓ₂Fe₍₁₋ₓ₂₎PO₄

In Chemical Formula 2, for example, 0.90 ≤ a2 ≤1.5 and 0.1 ≤ x2 ≤1.

The compound represented by Chemical Formula 1 may be a lithium iron phosphate compound. In Chemical Formula 1, a mole fraction of lithium may be appropriately or suitably adjusted between approximately (about) 0.9 and (about) 1.5, and for example, 0.90 ≤ a1 ≤ 1.2, or 0.95 ≤ a1 ≤ 1.1. In Chemical Formula 1, Mn may exist instead of Fe, and a mole fraction thereof may be 0 ≤ x1 ≤ 0.7, 0 ≤ x1 ≤ 0.5, 0 ≤ x1 ≤ 0.3, 0 ≤ x1 ≤ 0.1, or 0 ≤ x1 ≤ 0.05.

The compound represented by Chemical Formula 2 may be a lithium manganese iron phosphate compound (lithium manganese iron phosphate). In Chemical Formula 2, a mole fraction of lithium may be 0.90 ≤ a2 ≤ 1.2 or 0.95 ≤ a2 ≤ 1.1, like Chemical Formula 1. In Chemical Formula 2, a mole fraction of manganese may be 0.2 ≤ x2 ≤ 0.9, 0.3 ≤ x2 ≤ 0.9, or 0.4 ≤ x2 ≤ 0.8, and particularly if 0.5 ≤ x2 ≤ 0.9, lithium ion conduction capacity is relatively high.

For example, the functional layer 71 may be lithium transition metal phosphate, and may include LiFePO₄, LiMn_{0.5}Fe_{0.5}PO₄, LiMnPO₄, and/or the like.

The functional layer 71 may include the above material, and may further include a binder and/or a conductive material. Here, a content (*e.g*., amount) of the material may be 80 wt% to 95 wt% with respect to an entire weight of the functional layer 71. A content (*e.g*., amount) of the binder may be 1 wt% to 10 wt% with respect to the entire weight of the functional layer 71, and the conductive material may be 0.1 wt% to 10 wt% with respect to the entire weight of the functional layer 71.

The binder may attach material particles within the functional layer 71 to each other, and may attach the material particles to the substrate 70 as well. The binder may include a non-water-soluble binder, a water-soluble binder, and/or a (*e.g*., any suitable) combination thereof.

The non-water-soluble binder may include polyvinyl chloride, carboxylated polyvinyl chloride, polyvinyl fluoride, a polymer including ethylene oxide, a polyethylene propylene copolymer, polystyrene, polyvinylpyrrolidone, polyurethane, polytetrafluoroethylene, polyvinylidene fluoride, polyethylene, polypropylene, polyamideimide, polyimide, and/or a (*e.g*., any suitable) combination thereof.

The water-soluble binder may include a rubber-based binder or a polymer resin binder. The rubber-based binder may be (*e.g*., may be selected from among) a styrene-butadiene rubber (SBR), an acrylated styrene-butadiene rubber, acrylonitrile-butadiene rubber (ABR), acryl rubber, butylrubber, fluorine rubber, and/or a (*e.g*., any suitable) combination thereof. The polymer resin binder may be (*e.g*., may be selected from among) polyethylene oxide, polyvinylpyrrolidone, polyepichlorohydrin, polyphosphazene, polyacrylonitrile, an ethylene-propylene-diene copolymer, polyvinylpyridine, chlorosulfonated polyethylene, latex, a polyester resin, an acrylic resin, a phenol resin, an epoxy resin, polyvinyl alcohol, and/or a (*e.g*., any suitable) combination thereof.

If the water-soluble binder is utilized as the binder, it may further include a cellulose-based compound capable of imparting viscosity. This cellulose-based compound may be utilized by mixing one or more types (kinds) of carboxyl methyl cellulose, hydroxypropyl methyl cellulose, methyl cellulose, and/or the like, and an alkali metal salt. Na, K, or Li may be utilized as the alkali metal.

The conductive material (*e.g*., a conductor or electron conductor) may be utilized to provide conductivity to the electrode, and the conductive material may include a carbon-based material, a metal-based material, a conductive polymer, and/or a (*e.g*., any suitable) mixture thereof.

A (*e.g*., any suitable) conductive material may be included/utilized in the functional layer 71 as long as it does not cause chemical change and is an electronic conductive material. For example, the conductive material may be a conductive material including a carbon-based material such as natural graphite, artificial graphite, carbon black, acetylene black, ketjen black, a carbon fiber, and/or the like; a metal-based material such as a metal powder or a metal fiber containing copper, nickel, aluminum, silver, and/or the like; a conductive polymer such as a polyphenylene derivative and/or the like; and/or a (*e.g*., any suitable) mixture thereof.

The active material layer 72 may include a positive electrode active material, and the positive electrode active material may be a compound (a lithiated intercalation compound) capable of reversible intercalation and deintercalation of lithium. An example of the positive electrode active material may be a compound expressed by any one or more of (*e.g*., selected from among) the following formulas: LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and/or LiₐFePO₄ (0.90 ≤ a ≤ 1.8).

In the above formulas, A may be (*e.g*., may be selected from among) the group including (*e.g*., consisting of) Ni, Co, Mn, and/or a (*e.g*., any suitable) combination thereof; X may be (*e.g*., may be selected from among) the group including (*e.g*., consisting of) Al, Ni, Co, Mn, Cr, Fe, Mg, Sr, V, a rare earth element, and/or a (*e.g*., any suitable) combination thereof; D may be (*e.g*., may be selected from among) the group including (*e.g*., consisting of) O, F, S, P, and/or a (*e.g*., any suitable) combination thereof; E may be (*e.g*., may be selected from among) the group including (*e.g.*, consisting of) Co, Mn, and/or a (*e.g*., any suitable) combination thereof; T may be (*e.g*., may be selected from among) the group including (*e.g*., consisting of) F, S, P, and/or a (*e.g*., any suitable) combination thereof; G may be (*e.g*., may be selected from among) the group including (*e.g*., consisting of) Al, Cr, Mn, Fe, Mg, La, Ce, Sr, V, and/or a (*e.g*., any suitable) combination thereof; Q may be (*e.g*., may be selected from among) the group including (*e.g*., consisting of) Ti, Mo, Mn, and/or a (*e.g.*, any suitable) combination thereof; Z may be (*e.g*., may be selected from among) the group including (*e.g*., consisting of) Cr, V, Fe, Sc, Y, and/or a (*e.g*., any suitable) combination thereof; and J may be (*e.g*., may be selected from among) the group including (*e.g*., consisting of) V, Cr, Mn, Co, Ni, Cu, and/or a (*e.g*., any suitable) combination thereof.

A compound of the positive electrode active material having a coating layer on a surface of the compound may be utilized, and/or a (*e.g*., any suitable) mixture of the compound and the compound that has the coating layer may be utilized. The coating layer may include at least one coating element compound of (*e.g*., selected from among) the group including (*e.g*., consisting of) an oxide of a coating element, a hydroxide of the coating element, an oxyhydroxide of the coating element, an oxycarbonate of the coating element, and/or a hydroxycarbonate of the coating element. A compound constituting the coating layer may be amorphous or crystalline. The coating element included in the coating layer may include Mg, Al, Co, K, Na, Ca, Si, Ti, V, Sn, Ge, Ga, B, As, Zr, and/or a (*e.g*., any suitable) combination thereof. A process of forming the coating layer may utilize a method (a spray coating method, a dipping method, and/or the like) that does not adversely affect an active material property of the active material layer.

An example of the positive electrode active material may include a positive electrode active material represented by Chemical Formula A1:

Chemical Formula A1 Liₐ₁₁Niₓ₁₁M¹¹_{y11}M¹²_{1-x11-y11}O₂

In Chemical Formula A1, for example, 0.9 ≤ a11 ≤ 1.8, 0.3 ≤ x11 ≤ 1, and 0 ≤ y11 ≤ 0.7, and each of M¹¹ and M¹² may independently be (*e.g*., selected from among) Al, B, Ce, Co, Cr, F, Mg, Mn, Mo, Nb, P, S, Si, Sr, Ti, V, W, Zr, and/or a (*e.g*., any suitable) combination thereof.

In Chemical Formula A1, for example, 0.4 ≤ x11 ≤ 1 and 0 ≤ y11 ≤ 0.6, 0.5 ≤ x11 ≤ 1 and 0 ≤y11 ≤ 0.5, 0.6 ≤ x11 ≤ 1 and 0 ≤ y11 ≤ 0.4, 0.7 ≤ x11 ≤ 1 and 0 ≤ y11 ≤ 0.3, 0.8 ≤ x11 ≤ 1 and 0 ≤ y11 ≤ 0.2, or 0.9 ≤ x11 ≤ 1 and 0 ≤ y11 ≤ 0.1.

A specific example of the positive electrode active material may include lithium nickel cobalt composite oxide represented by Chemical Formula A2.

Chemical Formula A2 Liₐ₁₂Niₓ₁₂Co_{y12}M¹³_{1-x12-y12}O₂

In Chemical Formula A2, for example, 0.9 ≤ a12 ≤ 1.8, 0.3 ≤ x12 < 1, and 0 < y12 ≤ 0.7, and M¹³ may be (*e.g*., may be selected from among) Al, B, Ce, Cr, F, Mg, Mn, Mo, Nb, P, S, Si, Sr, Ti, V, W, Zr, and/or a (*e.g.*, any suitable) combination thereof.

In Chemical Formula A2, for example, 0.3 ≤ x12 ≤ 0.99 and 0.01 ≤ y12 ≤ 0.7, 0.4 ≤ x12 ≤ 0.99 and 0.01 ≤ y12 ≤ 0.6, 0.5 ≤ x12 ≤ 0.99 and 0.01 ≤ y12 ≤ 0.5, 0.6 ≤ x12 ≤ 0.99 and 0.01 ≤ y12 ≤ 0.4, 0.7 ≤ x12 ≤ 0.99 and 0.01 ≤ y12 ≤ 0.3, 0.8 ≤ x12 ≤ 0.99 and 0.01 ≤ y12 ≤ 0.2, or 0.9 ≤ x12 ≤ 0.99 and 0.01 ≤ y12 ≤ 0.1.

A specific example of the positive electrode active material may include lithium nickel cobalt composite oxide represented by Chemical Formula A3.

Chemical Formula A3 Liₐ₁₃Niₓ₁₃Co_{y13}M¹⁴_{z13}M¹⁵_{1-x13-y13-z13}O₂

In Chemical Formula A3, for example, 0.9 ≤ a13 ≤ 1.8, 0.3 ≤ x13 ≤ 0.98, 0.01 ≤ y13 ≤ 0.69, and 0.01 ≤ z13 ≤ 0.69, M¹⁴ may be (*e.g*., may be selected from among) Al, Mn, and/or a (*e.g*., any suitable) combination thereof, and M¹⁵ may be of (*e.g*., may be selected from among) B, Ce, Cr, F, Mg, Mo, Nb, P, S, Si, Sr, Ti, V, W, Zr, and/or a (*e.g*., any suitable) combination thereof.

In Chemical Formula A3, for example, 0.4 ≤ x13 ≤ 0.98, 0.01 ≤ y13 ≤ 0.59, and 0.01 ≤ z13 ≤ 0.59, 0.5 ≤ x13 ≤ 0.98, 0.01 ≤ y13 ≤ 0.49, and 0.01 ≤ z13 ≤ 0.49, 0.6 ≤ x13 ≤ 0.98, 0.01 ≤ y13 ≤ 0.39, and 0.01 ≤ z13 ≤ 0.39, 0.7 ≤ x13 ≤ 0.98, 0.01 ≤ y13 ≤ 0.29, and 0.01 ≤ z13 ≤ 0.29, 0.8 ≤ x13 ≤ 0.98, 0.01 ≤ y13 ≤ 0.19, and 0.01 ≤ z13 ≤ 0.19, or 0.9 ≤ x13 ≤ 0.98, 0.01 ≤ y13 ≤ 0.09, and 0.01 ≤ z13 ≤ 0.09.

If a negative electrode active material layer that will be described in more detail later includes silicon to implement relatively high-capacity, an irreversible phenomenon of the silicon-based negative electrode active material may occur, and to solve or reduce the irreversible phenomenon, the positive electrode active material may further include a sacrificial positive electrode material.

A lithium rechargeable battery may be intended to improve lifespan by compensating for the irreversibility of the negative electrode by including the sacrificial positive electrode material, but for example, irreversibility of the positive electrode may also increase so that capacity of the positive electrode decreases. However, for example, because the capacity of the positive electrode is relatively high compared with the capacity of the negative electrode, the decreased capacity of the positive electrode may not decrease (*e.g*., may not effectively or substantially decrease) the (*e.g*., overall) capacity of the lithium rechargeable battery if (*e.g*., when) the positive electrode includes the sacrificial positive electrode material. For example, the silicon-based negative electrode active material may cause the problem of volume expansion and contraction during charging and discharging of the battery. If a cutoff voltage of the negative electrode is lowered during the discharging, the contraction caused during the discharging may be suppressed or reduced. As a result, the lithium rechargeable battery may improve a lifespan characteristic without (*e.g*., effectively or substantially) reducing the capacity of the lithium rechargeable battery by sacrificing some of the capacity of the positive electrode that is not utilized or needed.

The lithium sacrificial positive electrode material may utilize a material (*e.g*., lithium nickel oxide, lithium molybdenum oxide, and/or the like) having a large capacity and a relatively high irreversibility. The sacrificial positive electrode material may be a material in which an Li ion is desorbed from the sacrificial positive electrode material at a voltage from about 2.75 to about 4.5V if (*e.g.*, when) the lithium rechargeable battery is charged. For example, the sacrificial positive electrode material may be (*e.g*., may be selected from among) Li₂NiO₂, Li₂MoO₃, and/or a (*e.g*., any suitable) combination thereof.

A content (*e.g*., amount) of the sacrificial positive electrode material may be greater than 0 wt% to about 20 wt% or less based on a total of 100 wt% of the positive electrode active material, and for example, the content (*e.g*., amount) of the sacrificial positive electrode material may be about 5 wt% to about 15 wt% or about 5 wt% to about 10 wt%. The capacity and the lifespan characteristic of the lithium rechargeable battery may be concurrently (*e.g*., simultaneously) improved by utilizing the sacrificial positive electrode material with the above contents (*e.g*., amounts).

For example, the positive electrode active material layer 72 may include the positive electrode active material, and may further include a binder and/or a conductive material. In one or more embodiments, a content (*e.g*., amount) of the positive electrode active material may be 90 wt% to 98 wt% or 90 wt% to 95 wt% based on an entire weight of the positive electrode active material layer. A content (*e.g*., amount) of each of the binder and the conductive material may be 1 wt% to 5 wt% based on the entire weight of the positive electrode active material layer.

The binder may (effectively) attach positive electrode active material particles to each other, may attach the positive electrode active material to the functional layer or the substrate, and may be the same as the binder that included in the functional layer 71.

The conductive material may be utilized to provide conductivity to the electrode, and may be the same as the conductive material included in the functional layer 71.

For example, the substrate 70 according to one or more embodiments of the present disclosure may include an electrode active portion (or an electrode active region) DA and an electrode uncoated portion (or an electrode uncoated region) DB (*see, e.g.,* FIG. 1). The active material layer 72 may be formed at the electrode active portion DA, and may not be formed on the electrode uncoated portion DB and the substrate may be exposed on the electrode uncoated portion DB.

The electrode uncoated portion DB may be a portion in which the active material layer is not formed, and may be formed at an edge around (*e.g*., surrounding) the active material layer. However, the electrode uncoated portion DB according to one or more embodiments of the present disclosure may be a portion for drawing an electric current to the outside, and may protrude from the electrode active portion DA except for the substrate portion exposed at the edge around (*e.g*., surrounding) the active material layer.

The functional layer 71 may include a first portion 7 that is formed in the electrode active portion DA to overlap the active material layer 72, and a second portion 8 that extends to the electrode uncoated portion DB.

The functional layer 71 may have a resistance (*e.g*., a resistance value) greater than that of the substrate 70 and lower than that of the active material layer 72 to serve as a resistance layer.

For example, a resistance of the functional layer 71 may be 5 to 25 times or 10 to 20 times greater than a resistance of the substrate 70.

As described above, the resistance of the functional layer 71 may be larger than the resistance of the substrate 70, so that a contact resistance between the functional layer 71 and the negative electrode may be 5 to 25 times greater than a contact resistance if (*e.g*., when) the substrate 70 and the negative electrode are in contact due to separator shrinkage, separator damage, and/or the like. Thus, for example, a short circuit current may be relatively reduced so that Joule heat is reduced. Therefore, a risk of fire due to heat generation may be reduced.

The second portion 8 may be formed at a portion of the electrode uncoated portion DB so that an electric current is drawn out to the outside and a welded portion is exposed, and an area of the second portion 8 may be formed to be 60% or less of an area of the electrode uncoated portion DB.

For example, a length L2 of the electrode uncoated portion DB may be 2 mm or more and 10 mm or less, or 2 mm or more and 7 mm or less, and a length L1 of the second portion 8 may be greater than 0 and 5 mm or less, or 0.1 mm or more and 3 mm or less.

The functional layer 71 may be formed to have a larger area than that of the active material layer 72 and protrude around the active material layer 72, but may be (*e.g*., may be formed to be) smaller than the substrate 70 so that a boundary line of the functional layer 71 is arranged within a boundary line of the substrate 70.

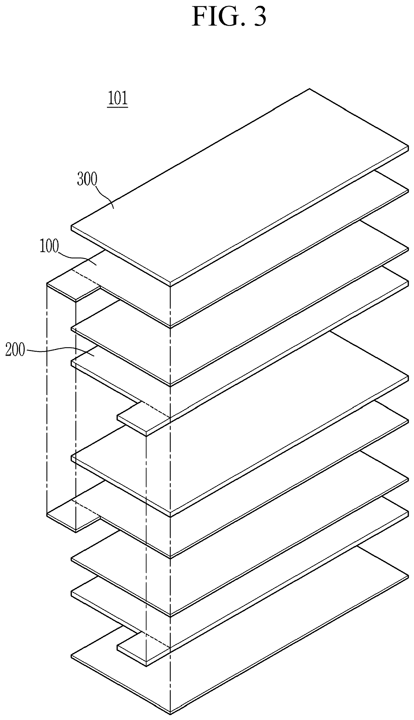

The above electrode may be utilized in a stacked electrode assembly, and hereinafter, an electrode assembly according to one or more embodiments of the present disclosure will be described with reference to FIG. 3.

FIG. 3 is a schematic diagram of the stacked electrode assembly according to one or more embodiments of the present disclosure.

The electrode assembly 101 according to one or more embodiments of the present disclosure may be the stacked electrode assembly 101 in which the negative electrode 100 and the positive electrode 200 are repeatedly stacked with a separator 300 interposed therebetween.

The separator 300 may be a polymer film that passes a lithium ion (allows lithium ions to pass through). The separator may be made of (*e.g*., may include) polyethylene, polypropylene, polyvinylidene fluoride, or a multifilm of two or more films thereof, and may be made of (*e.g*., may include) a mixed multifilm such as a polyethylene/polypropylene two-layer separator, a polyethylene/polypropylene/polyethylene three-layer separator, a polypropylene/polyethylene/ polypropylene three-layer separator, and/or the like.

The negative electrode 100 may include an electrode portion where an active material layer is formed at (on) a metal substrate (*e.g*., a current collector) made of copper (Cu), and an uncoated portion where the metal substrate is exposed by not applying an active material.

The positive electrode 200 may include an electrode portion where an active material is applied to a metal substrate (*e.g*., a current collector) made of aluminum (Al) and an electrode uncoated portion where the metal substrate is exposed by not applying an active material. The positive electrode 200 may be the electrode shown in FIG. 1 and FIG. 2.

The negative electrode may be formed larger than the positive electrode, and for example, a distance between a boundary line of the negative electrode and a boundary line of the positive electrode may be greater than 0 and 5 mm or less, or 0.5 mm or more and 3 mm or less.

If the negative electrode and the positive electrode are exposed to a relatively high temperature, the separator arranged between the negative electrode and the positive electrode may shrink so that the active material layers and the electrode uncoated portions of different polarities of the negative electrode and the positive electrode contact each other. As a result, a short circuit may occur. As the short circuit current increases, Joule heat may increase. In one or more embodiments of the present disclosure, the functional layer with a greater resistance than that of the substrate may be formed, so that the negative electrode is in contact with the functional layer rather than directly with the substrate of the positive electrode. Thus, for example, the short circuit current may be relatively reduced so that Joule heat is reduced.

A plurality of electrode uncoated portions of the positive electrode 200 may be electrically connected to an external terminal and a plurality of electrode uncoated portions of the negative electrode 100 may be electrically connected to an external terminal (*e.g*., uncoated portions of the same polarity may be electrically connected to the same external terminal). The electrode uncoated portion of each positive electrode 200 and the electrode uncoated portion of each negative electrode 100 may protrude in substantially the same direction, but the present disclosure is not limited thereto, and the electrode uncoated portions of the positive electrode 200 and the electrode uncoated portions of the negative electrode 100 may protrude in opposite directions, and may be spaced and/or apart (*e.g*., spaced apart or separated) from each other.

The separator 300 may be formed to be larger than the negative electrode 100 and the positive electrode 200 to protrude outward from the negative electrode 100 and the positive electrode 200.

The electrode assembly 101 may be accommodated together with an electrolyte in a pouch-shaped or can-shaped prismatic case to be utilized in the rechargeable battery.

The electrolyte may include a non-aqueous organic solvent and a lithium salt. The non-aqueous organic solvent may serve as a medium through which ions involved in the electrochemical reaction of the battery move.

The lithium salt may be a material that is dissolved in an organic solvent so that it acts as a supply source of a lithium ion within the battery to enable a basic operation of the lithium rechargeable battery and it serves to promote a movement of the lithium ion between the positive and negative electrodes. A representative example of the lithium salt (*e.g*., utilized as a supporting electrolytic salt) may include one or more e.g.selected from the group e.g.consisting of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)C_{y}F_{2y+1}SO₂ (wherein x and y are natural numbers, and for example, are an integer of 1 to 20), LiCl, Lil, LiB(C₂O₄)₂ (lithium bis(oxalato) borate (LiBOB)), and combinations thereof.

A concentration of the lithium salt may be utilized within a range of 0.1 M to 2.0 M. If the concentration of the lithium salt is included within this range, the electrolyte may have appropriate or suitable conductivity and viscosity so that the electrolyte shows excellent or suitable electrolyte performance and the lithium ion effectively moves.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, *e.g*., a battery controller, and/or any other relevant devices or components according to embodiments of the present disclosure described herein may be implemented utilizing a (*e.g*., any suitable) hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

## Claims

1. An electrode, comprising:
a substrate (70) comprising an electrode uncoated portion (DB) and an electrode active portion (DA);
a functional layer (71) on the substrate (70); and
an active material layer (72) on the functional layer (71) of the electrode active portion (DA),
wherein the functional layer (71) comprises a first portion (7) overlapping the electrode active portion (DA) and a second portion extending from the first portion (7) to the electrode uncoated portion (DB), and
wherein the electrode is for a rechargeable battery.

2. The electrode as claimed in claim 1, wherein a resistance of the functional layer (71) is greater than a resistance of the substrate (70) and is less than a resistance of the active material layer (72).

3. The electrode as claimed in claim 1 or 2, wherein the resistance of the functional layer (71) is 5 to 25 times greater than the resistance of the substrate (70).

4. The electrode as claimed in any of claims 1 to 3, wherein an area of the second portion is 60% or less than an area of the electrode uncoated portion (DB).

5. The electrode as claimed in any of claims 1 to 4, wherein a length (L1) of the second portion (8) is greater than 0 mm and 5 mm or less.

6. The electrode as claimed in any of claims 1 to 5, wherein a length of the electrode uncoated portion (DB) is 2 mm or more and 10 mm or less.

7. The electrode as claimed in any of claims 1 to 6, wherein a boundary line of the functional layer (71) is within a boundary line of the substrate (70).

8. The electrode as claimed in any of claims 1 to 7, wherein the electrode uncoated portion (DB) protrudes from a side of the electrode active portion (DA).

9. The electrode as claimed in any of claims 1 to 8, wherein the active material layer (72) comprises a positive electrode active material.

10. The electrode as claimed in any of claims 1 to 9, wherein the active material layer (72) comprises an active material represented by Chemical Formula A1:
Chemical Formula A1 Liₐ₁₁Niₓ₁₁M¹¹_{y11}M¹²_{1-x11-y11}O₂
wherein, in Chemical Formula A1, 0.9 ≤ a11 ≤ 1.8, 0.3 ≤ x11 ≤ 1, and 0 ≤ y11 ≤ 0.7, and each of M¹¹ and M¹² is independently selected from among Al, B, Ce, Co, Cr, F, Mg, Mn, Mo, Nb, P, S, Si, Sr, Ti, V, W, Zr, and a combination thereof.

11. The electrode as claimed in any of claims 1 to 10, wherein the functional layer (71) comprises a compound represented by Chemical Formula 1, a compound represented by Chemical Formula 2, or a combination thereof:
Chemical Formula 1 Liₐ₁M¹ₓ₁Fe₍₁₋ₓ₁₎PO₄,
in Chemical Formula 1, 0.90 ≤ a1 ≤1.5, and 0 ≤ x1 ≤ 0.4, and M¹ is Mg, Co, Ni, or a combination thereof, and
Chemical Formula 2 Liₐ₂Mnₓ₂Fe₍₁₋ₓ₂₎PO₄
n Chemical Formula 2, 0.90 ≤ a2 ≤ 1.5 and 0.1 ≤ x2 ≤ 1.

12. An electrode assembly (101) comprising:
a first electrode comprising the electrode as claimed in any of claims 1 to 11;
a second electrode having an opposite polarity to the first electrode; and
a separator (300) between the first electrode and the second electrode.

13. The electrode assembly (101) as claimed in claim 12, wherein a distance between a boundary line of the first electrode and a boundary line of the second electrode is greater than 0 mm and 5 mm or less.

14. The electrode assembly (101) as claimed in claim 12 or 13, wherein the first electrode, the separator (300), and the second electrode have a sheet shape and are alternately and repeatedly stacked.

15. A rechargeable battery comprising the electrode assembly (101) as claimed in claims 12 to 14 and an electrolyte.
